# EUROPÄISCHE PATENTANMELDUNG

(11) **EP 4 397 528 A1**
(43) Veröffentlichungstag der Anmeldung: **10.07.2024**
(21) Anmeldenummer: 23215587.9
(22) Anmeldetag: 11.12.2023
(51) Int. Cl.: B60L 53/10, B60R 16/02, H01R 13/502, H01R 13/52, H01R 31/06, H01R 43/26, B60L 53/16, B60R 16/00

(54) **LADEDOSE FÜR EIN FAHRZEUG**

(30) Priorität: 04.01.2023 DE 102023100130
(71) Anmelder: Lisa Dräxlmaier GmbH, 84137 Vilsbiburg (DE)
(72) Erfinder: Ranftl, Oliver, 5270 Mauerkirchen (AT); Kreuzhuber, Markus, 4910 Ried (AT)

(57) **Zusammenfassung**

Die vorliegende Erfindung bezieht sich auf eine Ladedose für ein Fahrzeug, wobei die Ladedose (100) zwei L-förmige Zwischenwinkel (108) aufweist, die jeweils ein Kontaktelement (104) der Ladedose elektrisch leitend mit einer Schnittstelle (110) der Ladedose (100) zu einem Leiter (112) eines Leitungssatzes (114) des Fahrzeugs verbinden, wobei die Kontaktelemente (104) in einem länderspezifischen beziehungsweise variantenspezifischen Abstand zueinander an vorderen Schenkeln (116) der Zwischenwinkel (108) angeordnet sind und die Schnittstellen (110) an quer zu den vorderen Schenkel (116) ausgerichteten hinteren Schenkeln (118) der Zwischenwinkel (108) angeordnet sind, wobei die Zwischenwinkel (108) elektrisch voneinander isoliert sind und die vorderen Schenkel (116) mit den Kontaktelementen (104) innerhalb eines Gehäuse (120) der Ladedose (100) quer zu einer Steckrichtung (106) der Kontaktelemente (104) angeordnet sind und die hinteren Schenkel (118) mit den Schnittstellen (110 )in aus einer Rückseite des Gehäuses (120) ragenden Domen (124) des Gehäuses (120) angeordnet sind.

## Beschreibung

### Technisches Gebiet

Die vorliegende Erfindung betrifft eine Ladedose für ein Fahrzeug.

### Stand der Technik

Die vorliegende Erfindung wird im Folgenden hauptsächlich in Verbindung mit Bordnetzen für elektrische Fahrzeuge beschrieben.

Ein elektrisch angetriebenes Fahrzeug kann über eine Ladedose geladen werden. Dazu wird ein Ladekabel eines Ladegeräts oder einer Ladesäule mit einem Ladestecker in die Ladedose eingesteckt und ein Ladevorgang gestartet.

Eine Steckgeometrie der Ladedose kann durch einen länderspezifischen Ladestandard genormt sein, damit das Fahrzeug an allen Ladegeräten beziehungsweise Ladesäulen des Landes aufgeladen werden kann. Eine Gestaltung der Ladedose abseits von der genormten Steckgeometrie ist bei unterschiedlichen Herstellern von elektrisch angetriebenen Fahrzeugen individuell anders.

Dadurch existiert eine große Variantenvielfalt an Ladedosen, obwohl alle den gleichen Verwendungszweck haben.

### Beschreibung der Erfindung

Eine Aufgabe der Erfindung ist es daher, unter Einsatz konstruktiv möglichst einfacher Mittel eine verbesserte Ladedose bereitzustellen. Eine Verbesserung kann hierbei beispielsweise eine Verringerung der Variantenvielfalt betreffen.

Die Aufgabe wird durch den Gegenstand des unabhängigen Anspruchs gelöst. Vorteilhafte Weiterbildungen der Erfindung sind in den abhängigen Ansprüchen, der Beschreibung und den begleitenden Figuren angegeben.

Eine Ladedose weist genormte Kontaktelemente auf. Dabei unterscheiden sich Art und Position der Kontaktelemente von Weltregion zu Weltregion. Insbesondere weisen die zwei Kontaktelemente eines Gleichstromteils der Ladedose in Abhängigkeit von der Weltregion unterschiedliche Achsabstände auf. Ebenso sind die Kontaktelemente in manchen Weltregionen beispielsweise männlich, in anderen Weltregionen weiblich. Um bei verschiedenen Fahrzeugen Ladedosen an unterschiedlichen Positionen am Fahrzeug verbauen zu können, existieren für jede Weltregion mehrere unterschiedliche Varianten der Ladedose.

Beispielsweise können die Varianten unterschiedliche Abgangsrichtungen von Leitern eines Leitungssatzes des Fahrzeugs aufweisen. Ebenso können die Varianten für unterschiedliche Arten von Leitern, beispielsweise Flachleiter beziehungsweise Stromschienen oder Rundleiter beziehungsweise Kabel konfiguriert sein.

Bei dem hier vorgestellten Ansatz wird eine einheitliche Schnittstelle zu dem Leitungssatz verwendet. Erforderliche Varianten werden durch unterschiedlich geformte Leitungssätze ausgebildet. An der Schnittstelle können sowohl Flachleiter als auch Kabelschuhe von Rundleitern befestigt werden.

Die vereinheitlichte Schnittstelle ist hier über zwei Zwischenstücke mit den Kontaktelementen verbunden. Die Zwischenstücke sind dabei abgewinkelt und werden als Zwischenwinkel bezeichnet. Durch die abgewinkelte Form weisen die Zwischenstücke je eine vordere Fläche auf, an der jeweils eines der Kontaktelemente der erforderlichen länderspezifischen Art an der erforderlichen länderspezifischen Position einfach angeordnet werden kann. Die abgewinkelte Form ermöglicht weiterhin je einen rückseitigen Bereich pro Zwischenstück, der im Wesentlichen parallel zu dem jeweiligen Kontaktelement ausgerichtet ist. Die rückseitigen Bereiche bilden die Schnittstelle zu dem Leitungssatz aus. Von diesem Bereich aus können Leiter in alle Richtungen weggeführt werden. Dabei kann mit jedem Zwischenstück je ein Leiter des Leitungssatzes verbunden werden.

Durch den hier vorgestellten Ansatz kann eine Variantenvielfalt bei Ladedosen deutlich verringert werden, was zu verringerten Werkzeugkosten führen kann. Verschiedene Varianten der Leitungssätze können mit wesentlich weniger Aufwand hergestellt werden als Varianten der Ladedose. Zusätzlich kann für Ladedosen für unterschiedliche Weltregionen ein im Wesentlichen einheitliches Innenleben verwendet werden und lediglich länderspezifische Kontaktelemente in länderspezifischen Steckgeometrien an den länderspezifischen Positionen auf den Zwischenstücken angeordnet werden.

Es wird eine Ladedose für ein Fahrzeug vorgeschlagen, wobei die Ladedose zwei L-förmige Zwischenwinkel aufweist, die jeweils ein Kontaktelement eines Gleichstromteils der Ladedose elektrisch leitend mit einer Schnittstelle der Ladedose zu einem Leiter eines Leitungssatzes des Fahrzeugs verbinden, wobei die Kontaktelemente in einem länderspezifischen beziehungsweise variantenspezifischen Abstand zueinander an vorderen Schenkeln der Zwischenwinkel angeordnet sind und die Schnittstellen an quer zu den vorderen Schenkel ausgerichteten hinteren Schenkeln der Zwischenwinkel angeordnet sind, wobei die Zwischenwinkel elektrisch voneinander isoliert sind und die vorderen Schenkel mit den Kontaktelementen innerhalb eines Gehäuse der Ladedose quer zu einer Steckrichtung der Kontaktelemente angeordnet sind und die hinteren Schenkel mit den Schnittstellen in aus einer Rückseite des Gehäuses ragenden Domen des Gehäuses angeordnet sind.

Eine Ladedose kann je nach Ladestandard eines bestimmten Landes Kontaktelemente aufweisen, die als Pin oder Hülse ausgeführt sind. Die Kontaktelemente können je nach Ladestandard unterschiedlich weit voneinander entfernt sein. Die Kontaktelemente können dabei parallel zueinander in einer Steckrichtung der Kontaktelemente angeordnet sein. Die Kontaktelemente können in einer Steckgeometrie der Ladedose berührgeschützt angeordnet sein. Die Steckgeometrie kann ebenfalls durch den Ladestandard definiert sein.

Die Ladedose kann ferner eine Schnittstelle zu einem Leitungssatz aufweisen. Über die Schnittstelle können Leiter des Leitungssatzes elektrisch leitend mit den Kontaktelementen verbunden werden. Die Schnittstelle kann für verschiedene Varianten der Ladedose vereinheitlicht ausgeführt sein.

Ein Zwischenwinkel kann zwischen einem Kontaktelement und einer Schnittstelle zu einem der Leiter angeordnet sein. Der Zwischenwinkel ist elektrisch leitend und aus einem Metallmaterial. Das Metallmaterial kann beispielsweise ein Kupfermaterial oder ein Aluminiummaterial sein. Der Zwischenwinkel kann eine abgewinkelte Form aufweisen. Der Zwischenwinkel kann folglich zwei Schenkel aufweisen. Ein als vorderer Schenkel bezeichneter erster Schenkel des Zwischenwinkels kann mit dem Kontaktelement elektrisch leitend verbunden sein und im Wesentlichen senkrecht zu der Steckrichtung des Kontaktelements ausgerichtet sein. Ein als hinterer Schenkel bezeichneter zweiter Schenkel des Zwischenwinkels kann die Schnittstelle aufweisen und im Wesentlichen parallel zu der Steckrichtung ausgerichtet sein.

Die Schnittstelle kann dazu ausgebildet sein, mit einem Kabelschuh des Leiters beziehungsweise direkt mit dem Leiter in Form einer Stromschiene verbunden zu werden.

Die Ladedose kann ein Gehäuse aus einem Kunststoffmaterial aufweisen. Das Gehäuse kann elektrisch isolieren. Das Gehäuse kann zumindest zwei Dome für die hinteren Schenkel an seiner Rückseite aufweisen. Ein Dom kann ein im Wesentlichen zylindrischer Fortsatz des Gehäuses sein. Die Dome können im Wesentlichen an der Steckrichtung ausgerichtet sein.

Die Dome können je eine rückseitige Öffnung aufweisen. Die Schnittstelle im Inneren eines Doms kann durch die Öffnung erreicht werden. Die Dome können gedichtete Verschlusskappen aufweisen. Die Verschlusskappen können je eine Durchführung für den Leiter des Leitungssatzes durch eine Deckelfläche der Verschlusskappe aufweisen. Zwischen den Verschlusskappen und den Domen kann zumindest je eine berührende Dichtung angeordnet sein. Die Verschlusskappen können auf die Leiter des Leitungssatzes aufgeschoben werden. Dann können die Leiter an den Schnittstellen in den Domen mit den Zwischenwinkeln verbunden werden und die Verschlusskappen auf die Dome aufgeschoben werden, um die Dome zu verschließen. Durch die Verschlusskappen können die Schnittstellen vor äußeren Einflüssen geschützt werden. Dichtungen können aus einem elastischen Material, wie einem Gummimaterial oder einem Elastomermaterial sein. Die Dichtungen können beim Aufschieben der Verschlusskappen geringfügig elastisch verformt werden und so zwischen den Verschlusskappen und den Domen abdichten. Die Dichtungen können beispielsweise O-Ringe sein. Die Dichtungen und das Gehäuse oder die Verschlusskappen können alternativ auch als Zweikomponentenspritzguss aus einer Weichkomponente für die Dichtungen und einer Hartkomponente für das Gehäuse beziehungsweise die Verschlusskappe ausgeführt werden.

Die Verschlusskappen können zumindest je eine Rasteinrichtung zum Verrasten an Gegenstücken des Gehäuses aufweisen. Die Verschlusskappen oder das Gehäuse können beispielsweise Rastnasen aufweisen, hinter denen Laschen des Gehäuses oder der Verschlusskappen einrasten, wenn die Verschlusskappen auf die Dome aufgeschoben werden. Die Rasteinrichtungen können für eine sichere mechanische Verbindung zwischen den Verschlusskappen und dem Gehäuse sorgen.

Die Durchführungen können je einen Kragen zum Abstützen des Leiters aufweisen. Die Dichtungen können dazu ausgebildet sein, abgestützte Kräfte auf die Dome zu übertragen. Ein Kragen kann ein entlang des Leiters verlaufender Rand um die Durchführung sein. Der Kragen kann als Flansch bezeichnet werden. Der Kragen kann eine Anlagefläche für den Leiter bereitstellen. Durch die Anlagefläche kann eine lokale Lastspitze am Leiter vermieden werden. Die Kragen können ferner einen Schutz vor Verschmutzungen und eindringender Feuchtigkeit bieten. Die Dichtungen können aufgrund ihrer Elastizität trotz geringfügiger Relativbewegungen zwischen dem Leiter und der Ladedose Bewegungen kompensieren und weiter abdichten.

Die Verschlusskappen können dazu ausgebildet sein, auf die Leiter aufgeschoben zu werden, bevor die Leiter über die Schnittstellen mit den Zwischenwinkeln verbunden werden. Die Verschlusskappen können dabei so weit auf die Leiter geschoben werden, bis die Schnittstellen in den Domen erreichbar sind. Nach dem Befestigen der Leiter an den Schnittstellen können die Verschlusskappen über die Dome geschoben werden und durch die Dichtung an den Domen abdichten.

Die hinteren Schenkel können an den Schnittstellen je eine Gewindebuchse zum Verschrauben des Leiters aufweisen. Die Gewindebuchse kann beispielsweise an den hinteren Schenkel angeschweißt sein. Dabei kann die Gewindebuchse beispielsweise durch Reibschweißen angeschweißt sein. Durch eine Gewindebuchse kann ein belastbares Gewinde bereitgestellt werden. Die Gewindebuchse kann aus einem härteren Material als der Zwischenwinkel bestehen.

Die Dome können je eine an den Gewindebuchsen ausgerichtete seitliche Serviceöffnung aufweisen. Durch die Serviceöffnung kann ein Werkzeug zum Verschrauben der Schnittstelle eingeführt werden. Ebenso kann durch die Serviceöffnung eine Schraube zum Verschrauben der Schnittstelle eingeführt werden. Die Serviceöffnungen können durch einen separaten Servicedeckel abgedichtet werden. Ebenso können die Serviceöffnungen durch das Aufschieben der Verschlusskappen abgedichtet werden.

Die Verschlusskappen können ebenfalls Serviceöffnungen aufweisen, die in einer Endlage der Verschlusskappen an den Gewindebuchsen ausgerichtet sind. Zumindest die Serviceöffnungen der Verschlusskappen können durch Servicedeckel verschließbar sein. Die Serviceöffnungen der Dome und der Verschlusskappen können annäherungsweise konzentrisch sein. Die Servicedeckel können nur die Serviceöffnungen der Verschlusskappen oder auch gleichzeitig die Serviceöffnungen der Dome verschließen. Wenn ein Servicedeckel die Serviceöffnungen an der Verschlusskappe und dem Dom verschließt, kann der Servicedeckel die Verschlusskappe und den Dom mechanisch miteinander verbinden und ein Abziehen der Verschlusskappe unmöglich machen.

Die Servicedeckel können je ein Dichtelement zum Abdichten der Serviceöffnung aufweisen. Ein Dichtelement kann aus einem elastischen Material bestehen und beim Verschließen der Serviceöffnung geringfügig elastisch verformt werden. Das Dichtelement kann beispielsweise vor dem Verschließen der Serviceöffnung auf den Servicedeckel aufgesetzt werden. Alternativ können der Servicedeckel und das Dichtelement als Zweikomponentenspritzguss aus einer Weichkomponente für das Dichtelement und einer Hartkomponente für den Servicedeckel ausgeführt sein. Das Dichtelement kann an beiden aneinander ausgerichteten Serviceöffnungen abdichten.

Die Dome können je eine Dichtung aufweisen. Die Dichtung kann zumindest einen Innendurchmesser des jeweiligen Doms überspannen und gegenüber dem Innendurchmesser ein Übermaß aufweisen. Die Dichtung kann in verbautem Zustand an einer Innenseite des Doms abdichten. Die Dichtung kann unter der Verschlusskappe angeordnet sein. Die Dichtung kann durch die Verschlusskappe gegen eine Kante des Doms gepresst werden, um an der Kante abzudichten. Die Dichtung kann vor dem Aufschieben auf den Dom in die Verschlusskappe eingelegt werden.

Die Dichtung kann ferner eine Durchführung für den Leiter des Leitungssatzes aufweisen. Die Durchführung kann ein Untermaß gegenüber dem Leiter aufweisen. Die Durchführung kann im verbauten Zustand auf der Leitung abdichten. Die Dichtung kann beim Einbauen zusammengepresst werden. Durch das Zusammenpressen kann die Dichtung im Bereich der Durchführung gegen eine Oberfläche des Leiters gepresst werden und an dem Leiter abdichten.

### Kurze Figurenbeschreibung

Nachfolgend werden vorteilhafte Ausführungsbeispiele der Erfindung unter Bezugnahme auf die begleitenden Figuren erläutert. Es zeigen:
Fig. 1 zeigt eine Schnittdarstellung einer Ladedose gemäß einem Ausführungsbeispiel; und
Fig. 2 zeigt eine Darstellung einer Ladedose gemäß einem Ausführungsbeispiel.

Die Figuren sind schematische Darstellungen und dienen nur der Erläuterung der Erfindung. Gleiche oder gleichwirkende Elemente sind durchgängig mit den gleichen Bezugszeichen versehen.

### Detaillierte Beschreibung

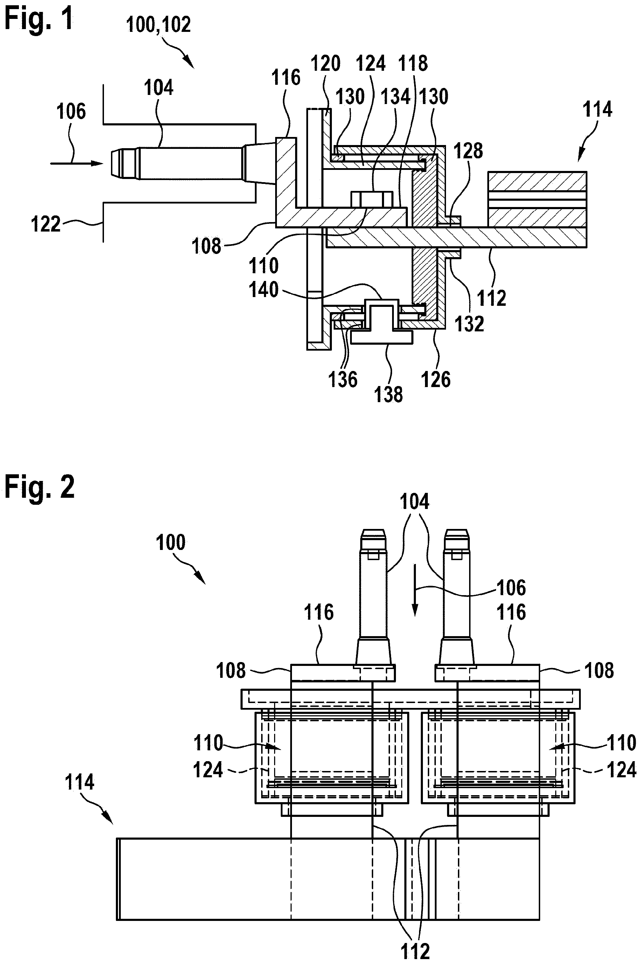

Fig. 1 zeigt eine Schnittdarstellung einer Ladedose 100 für ein Fahrzeug. Die Schnittdarstellung zeigt einen Gleichstromteil 102 der Ladedose 100 zum Schnellladen des Fahrzeugs. Im Bereich des Gleichstromteils 102 weist die Ladedose 100 zwei parallele Kontaktelemente 104 auf. Die Kontaktelemente 104 sind hier als Pins, also männlich geformte Kontaktelemente 104 ausgeführt. Die Kontaktelemente 104 können mit einem entsprechenden Gegenstück in einer Steckrichtung 106 zu einer elektrisch leitenden Steckverbindung zusammengesteckt werden. Jedes Kontaktelement 104 ist über einen eigenen Zwischenwinkel 108 elektrisch leitend mit einer Schnittstelle 110 zu einem elektrischen Leiter 112 eines Leitungssatzes 114 des Fahrzeugs verbunden.

Die Leiter 112 sind hier Flachleiter beziehungsweise Stromschienen. Im Leitungssatz 114 verlaufen die Stromschienen übereinander parallel zueinander. Die beiden Stromschienen sind dabei gegeneinander elektrisch isoliert und liegen im Betrieb auf unterschiedlichen elektrischen Hochvolt-Potenzialen. Die beiden Stromschienen können als Doppelstromschiene bezeichnet werden.

Die Kontaktelemente 104 sind auf vorderen Schenkeln 116 des Zwischenwinkels 108 angeordnet. Die vorderen Schenkel 116 sind im Wesentlichen senkrecht zu den Kontaktelementen 104 beziehungsweise der Steckrichtung 106 ausgerichtet. Die Schnittstellen 110 sind an hinteren Schenkeln 118 der Zwischenwinkel 108 angeordnet. Die vorderen Schenkel 116 und die hinteren Schenkel 118 sind hier rechtwinklig zueinander ausgerichtet und an einer Kante des Zwischenwinkels 108 einteilig miteinander verbunden. Die hinteren Schenkel 118 sind damit im Wesentlichen parallel zu den Kontaktelementen 104 beziehungsweise in der Steckrichtung 106 ausgerichtet.

Die vorderen Schenkel 116 sind in einem Gehäuse 120 der Ladedose angeordnet. Auf einer Vorderseite des Gehäuses 120 ist eine Steckkontur 122 der Ladedose ausgebildet. Die Kontaktelemente 104 ragen in Aussparungen der Steckkontur hinein. Die Steckkontur 122 gibt die Steckrichtung 106 vor, bildet ein Steckergesicht der Ladedose 100 aus, bietet einen Berührschutz für die Kontaktelemente 104 und ermöglicht ein verpolungssicheres Einstecken eines Ladesteckers in das Steckergesicht.

Die hinteren Schenkel 118 ragen auf einer Rückseite des Gehäuses 120 in Dome 124 des Gehäuses 120 hinein. Die Dome stehen über die Rückseite des Gehäuses 120 über.

In einem Ausführungsbeispiel sind die Dome 124 durch Verschlusskappen 126 verschlossen. Die Verschlusskappen 126 weisen je eine Durchführung 128 für einen Leiter 112 auf. Der Leiter 112 durchdringt also die Durchführung 128 der Verschlusskappe 126 und endet an der im Inneren des Doms 124 geschützten Schnittstelle 110.

In einem Ausführungsbeispiel sind die Dome 124 durch Dichtungen 130 gegen äußere Einflüsse abgedichtet, um die Schnittstellen 110 zu schützen. Hier ist je ein O-Ring als Dichtung 130 zwischen einem den Dom 124 umschließenden Rand der Verschlusskappe 126 und einer Außenseite des Doms 124 angeordnet. Zusätzlich ist je eine flächige Dichtung 130 zwischen einer Deckelfläche der Verschlusskappe 126 und einer Kante des Doms 124 angeordnet. Die Dichtung 130 wird durch die Verschlusskappe 126 gegen die Kante gepresst. Die Dichtung 130 umgreift die Kante und dichtet so auf einer Innenseite des Doms 124, an der Kante und zwischen der Außenseite und der Verschlusskappe 126 ab.

In einem Ausführungsbeispiel weist die Dichtung 130 ebenfalls eine Durchführung 128 für den Leiter 112 auf. Die Dichtung 130 dichtet an der Durchführung 128 auch am Leiter 112 ab.

In einem Ausführungsbeispiel weist die Verschlusskappe 126 an der Durchführung 128 einen Kragen 132 auf. Der Kragen 132 ragt von der Verschlusskappe 124 in Richtung Leitungssatz. Der Kragen 132 schützt die Durchführung 128 der dahinterliegenden Dichtung 130 beispielsweise vor Strahlwasser.

In einem Ausführungsbeispiel weisen die Schnittstellen 110 Gewindebuchsen 134 auf über die die Leiter 112 mit den Zwischenwinkeln 108 verschraubt sind. Zum Erreichen der Schrauben weisen die Dome 124 an den Gewindebuchsen 134 ausgerichtete Serviceöffnungen 136 in ihren Seitenwänden auf. Die Serviceöffnungen 136 sind durch Servicedeckel 138 verschlossen.

In einem Ausführungsbeispiel weisen auch die Verschlusskappen 126 entsprechende Serviceöffnungen 136 auf, die durch dieselben Servicedeckel 138 verschlossen sind. Zwischen Rändern der Serviceöffnungen 136 und den Servicedeckeln 138 sind dabei Dichtelemente 140 angeordnet. Die Dichtelemente 140 dichten dabei sowohl die Serviceöffnungen 136 der Dome 124 als auch die Serviceöffnungen 136 der Verschlusskappen 126 ab.

Fig. 2 zeigt eine Darstellung einer Ladedose 100 gemäß einem Ausführungsbeispiel. Die Ladedose 100 entspricht dabei im Wesentlichen der in Fig. 1 dargestellten Ladebuchse. Hier ist erkennbar, dass die Kontaktelemente 104 näher zusammen angeordnet sind als die Leiter 112 an den Schnittstellen 110. Die Kontaktelemente 104 sind also an den vorderen Schenkeln 116 außermittig angeordnet. Ein Abstand zwischen den Kontaktelementen 104 ist dabei abhängig von einem Ladestandard der Ladebuchse 100. Durch die vorhandene Breite der vorderen Schenkel 116 können die Kontaktelemente 104 auch in einem anderen Abstand angeordnet werden, um damit einem anderen Ladestandard zu entsprechen. Die Zwischenwinkel 108 und ein Abstand zwischen den Zwischenwinkeln 108 bleiben dabei gleich. Die Dome 124 sind auf der Rückseite nebeneinander angeordnet und an den Leitern 112 beziehungsweise den Zwischenwinkeln 108 ausgerichtet. Der Leitungssatz 114 geht hier um 90° versetzt zur Steckrichtung 106 ab.

Nachfolgend werden mögliche Ausgestaltungen der Erfindung nochmals zusammengefasst bzw. mit einer geringfügig anderen Wortwahl dargestellt.

Es wird eine Anschluss-Geometrie bzw. ein Anschluss-Konzept einer DC-Schnittstelle für Ladedosen vorgestellt.

Die Grundfunktion der Anschluss-Geometrie ist die Verbindung des DC-Ladeleitungssatzes mit einer Ladedose. Der hier vorgestellte Ansatz ermöglicht eine einfache, robuste, kostengünstige Lösung, die herstellerübergreifend verwendbar ist. Dabei kann eine einheitliche Lösung für alle Länder und deren Unter-Varianten verwendet werden. Eine einfache Skalierbarkeit kann durch eine Anpassung der Größe und Wandstärke des Kupferwinkels bzw. des Kabelschuhs/Flachleiters erreicht werden.

Der Anschluss kann nach oben, links und rechts erfolgen. Viele andere Abgangsrichtungen sind ohne bzw. mit auf ein Minimum reduzierten Varianten der Ladedose möglich. Die Ladedose kann einfach montiert und demontiert werden. Dabei ergibt sich eine Reduzierung des Assemblierungsaufwands. Die Anzahl der notwendigen Bauteile ist auf ein Minimum reduziert und die Anfertigung der verbleibenden Bauteile wird vereinfacht. Dadurch werden die Herstellungskosten der Ladedose und die Fertigungszeit sowie der Lager, Logistik und Verwaltungsaufwand erheblich reduziert.

Der Anschluss von Rundleitern und Flachleitern ist ohne zusätzliche Varianten der Ladedose möglich. Der geringe Aufbau der Geometrie und die flexible Gestaltung der Abgangsrichtung ermöglichen den Einbau in beengten Bauräumen. Eine externe Kühlung kann außerhalb der Ladedose über den Leitungssatz erfolgen.

Bei dem hier vorgestellten Ansatz weist die Kernladedose zwei Dome auf. Diese sind vorzugsweise rund ausgeführt. Öffnungen in den Domen für Servicedeckel sind optional. Die Funktion der Dome in Kombination mit Verschlusskappen sind die Dichtfunktion und die Aufnahme von Kräften, die von der Ladeleitung aufgebracht werden.

Die Kernladedose weist Verrastungen für die Verschlusskappen auf. Die Anzahl ist dabei bedarfsgerecht anpassbar.

Die Kernladedose weist ferner zwei Aufnahmen und Arretierungen der Kupferwinkel auf. Dichtelemente können an der Kernladedose angespritzt oder eingelegt werden. Die Kupferwinkel weisen je eine angeschweißte Gewindebuche auf. Die Gewindebuchse kann beispielsweise durch Reibschweißen oder ein ähnliches Verfahren am Kupferwinkel befestigt werden.

Eine außermittige Position des am jeweiligen Kupferwinkel angeschweißten DC-Pins ermöglicht den notwendigen Abstand zwischen den Domen. Optional können andere Materialien eingesetzt werden z.B. Alu.

Die Verschlusskappen können auf die Kabelschuhe bzw. die Flachleiter montiert werden. Die Verschlusskappen drücken und halten die Dichtelemente in Position und dienen zur Aufnahme von Kräften, die von den Ladeleitungen aufgebracht werden, wie beispielsweise zur erweiterten Führung. Die Verschlusskappen schützen die Dichtelemente z.B. vor Wasser-Druck eines Dampfstrahlers und sonstigen Krafteinwirkungen. Die Verschlusskappen können mit Rasthaken an der Kernladedose eingerastet werden. Alternativ können die Verschlusskappen verschraubt oder durch sonstige Befestigungsmöglichkeiten an der Kernladedose befestigt werden.

Optional können die Dichtelemente an die Verschlusskappen angespritzt oder eingelegt werden.

Verschiedenste geometrische Ausführungen der Servicedeckel sind möglich, wie beispielsweise eine Schalenform oder eine runde oder eckige Ausführung.

Die Montage der Servicedeckel ist auf den Verschlusskappen oder direkt auf den Domen der Kernladedose möglich.

Die Dichtelemente sind angespritzt oder als separate Bauteile montiert. Die Dichtelemente können als separate Bauteile oder an die Verschlusskappen angebunden ausgeführt sein. Die Dichtelemente können beispielsweise durch Filmscharniere oder Bänder aus Weichkomponente mit den Verschlusskappen verbunden sein. Die Dichtelemente ermöglichen die Demontage der Ladeleitungen beziehungsweise des Ladeleitungssatzes ohne Demontage der Ladedose. Die Dichtelemente dichten die Öffnungen für die Demontage in den Domen.

Das hier vorgestellte Konzept ermöglicht einen variablen Leitungsverlauf der Ladeleitungen ohne Varianten der Ladedose, da die Abgangsrichtung über die Ladeleitungen definiert wird. Die Flachleiter können direkt angeschraubt werden. Die Flachleiter können optional mit eingepressten Buchsen zu Aufnahme der Schraubkräfte ausgeführt werden. Die Flachleiter können alternativ mittels angeschweißten Kabelschuhen mit der Ladedose verschraubt werden.

Individuelle Biegungen der Ladeleitungen ermöglichen eine Vielzahl verschiedener Abgangsrichtungen. Dies ermöglicht eine gleiche oder auf ein Minimum reduzierte Anbindung an die Ladedose. Die Varianz liegt bei den Ladeleitungen, nicht in der Ladedose. Runde, unterschiedliche Querschnitte können an einen Standard-Kabelschuh geschweißt werden. Je nach Ausführung der Auflage kann die Wärme abgegeben oder primär in der Ladedose gehalten werden, dies erfolgt durch den Flachleiter/Kabelschuh und/oder die eingepressten Buchsen in verschiedensten geometrischen Ausführungen und Materialien.

Der hier vorgestellte Ansatz ermöglicht eine einfache Montage. Die Verschlusskappen können nach dem Verschweißen über den die Kabelschuhe/Flachleiter geschoben werden. Die "Dichtelemente innen" werden auf die Kabelschuhe/Flachleiter geschoben, falls sie nicht bereits direkt auf den Verschlusskappen oder auf der Kernladedose angebracht sind. Die Verschlusskappen mit dem Dichtelement werden bis zur Arretierung auf die Dome geschoben. Beim Eindrücken der Dichtelemente in die Dome entsteht zusätzlicher Druck auf die Dichtelemente um den Flachleiter, wodurch eine bessere Dichtfunktion erreicht wird. Die Leitungen werden verschraubt und die Servicedeckel geschlossen. Optional ist bei entsprechenden Platzverhältnissen ein direkter Verschluss durch die Verschlusskappen möglich.

Die Kernladedose, die Servicedeckel und die Verschlusskappen können im Spritzguss-Verfahren hergestellt werden. Die Dichtelemente können mit Silikon, TPE, 2K-Spritzguss-Verfahren und anderen Spritzgussverfahren hergestellt werden.

Die Dichtelemente können angespritzt aber auch als 1K-Bauteile gefertigt und nachträglich montiert werden. Sie können auch als separate Bauteile gefertigt und verwendet werden.

Die Kupferwinkel können durch Biegeverfahren hergestellt werden. Auch andere Herstellverfahren, wie beispielsweise Verschweißen sind anwendbar. Der DC-Pin kann durch anschweißen, einpressen oder ein sonstiges Verbindungsverfahren am jeweiligen Kupferwinkel befestigt werden. Die Schraubbuchse kann durch anschweißen, einpressen oder ein sonstiges Verbindungsverfahren an dem Kupferwinkel befestigt werden. Die Kupferwinkel können an den verschieden Bauteilen der Kernladedose montiert, umspritzt, verscheißt, verrastet oder unter Verwendung eines sonstigen Befestigungsverfahrens fixiert werden. Diese Verbindung kann fest, flexibel oder von den anderen Bauteilen erfolgen.

Eine optionale Kühlung kann über die Flachleiter/Kabelschuhe erfolgen. Die Kühlung kann von unten, oben oder umschlossen ausgeführt werden. Kühlmedium kann zirkulieren und somit die Kernladedose indirekt kühlen. Die Kühlung kann optional an der Ladedose befestigt werden.

Da es sich bei den vorhergehend detailliert beschriebenen Vorrichtungen und Verfahren um Ausführungsbeispiele handelt, können sie in üblicher Weise vom Fachmann in einem weiten Umfang modifiziert werden, ohne den Bereich der Erfindung zu verlassen. Insbesondere sind die mechanischen Anordnungen und die Größenverhältnisse der einzelnen Elemente zueinander lediglich beispielhaft.

### BEZUGSZEICHENLISTE

- 100: Ladedose
- 102: Gleichstromteil
- 104: Kontaktelement
- 106: Steckrichtung
- 108: Zwischenwinkel
- 110: Schnittstelle
- 112: Leiter
- 114: Leitungssatz
- 116: vorderer Schenkel
- 118: hinterer Schenkel
- 120: Gehäuse
- 122: Steckkontur
- 124: Dom
- 126: Verschlusskappe
- 128: Durchführung
- 130: Dichtung
- 132: Kragen
- 134: Gewindebuchse
- 136: Serviceöffnung
- 138: Servicedeckel
- 140: Dichtelement

## Patentansprüche

1. Ladedose (100) für ein Fahrzeug, wobei die Ladedose (100) zwei L-förmige Zwischenwinkel (108) aufweist, die jeweils ein Kontaktelement (104) der Ladedose elektrisch leitend mit einer Schnittstelle (110) der Ladedose (100) zu einem Leiter (112) eines Leitungssatzes (114) des Fahrzeugs verbinden, wobei die Kontaktelemente (104) in einem länderspezifischen beziehungsweise variantenspezifischen Abstand zueinander an vorderen Schenkeln (116) der Zwischenwinkel (108) angeordnet sind und die Schnittstellen (110) an quer zu den vorderen Schenkel (116) ausgerichteten hinteren Schenkeln (118) der Zwischenwinkel (108) angeordnet sind, wobei die Zwischenwinkel (108) elektrisch voneinander isoliert sind und die vorderen Schenkel (116) mit den Kontaktelementen (104) innerhalb eines Gehäuse (120) der Ladedose (100) quer zu einer Steckrichtung (106) der Kontaktelemente (104) angeordnet sind und die hinteren Schenkel (118) mit den Schnittstellen (110) in aus einer Rückseite des Gehäuses (120) ragenden Domen (124) des Gehäuses (120) angeordnet sind.

2. Ladedose (100) gemäß Anspruch 1, bei der die Dome (124) gedichtete Verschlusskappen (126) aufweisen, wobei die Verschlusskappen (126) je eine Durchführung (128) für den Leiter (112) durch eine Deckelfläche der Verschlusskappe (126) aufweisen, wobei zwischen den Verschlusskappen (126) und den Domen (124) zumindest je eine berührende Dichtung (130) angeordnet ist.

3. Ladedose (100) gemäß Anspruch 2, bei der die Verschlusskappen (126) zumindest je eine Rasteinrichtung zum Verrasten an Gegenstücken des Gehäuses (120) aufweisen.

4. Ladedose (100) gemäß einem der Ansprüche 2 bis 3, bei der die Durchführungen (128) je einen Kragen (132) zum Abstützen des Leiters (112) aufweisen, wobei die Dichtungen (130) dazu ausgebildet sind, abgestützte Kräfte auf die Dome (124) zu übertragen.

5. Ladedose (100) gemäß einem der Ansprüche 2 bis 4, bei der die Verschlusskappen (126) dazu ausgebildet sind, auf die Leiter (112) aufgeschoben zu werden, bevor die Leiter (112) über die Schnittstellen (110) mit den Zwischenwinkeln (108) verbunden werden.

6. Ladedose (100) gemäß einem der vorhergehenden Ansprüche, bei der die hinteren Schenkel (118) an den Schnittstellen (110) je eine Gewindebuchse (134) zum Verschrauben des Leiters (112) aufweisen.

7. Ladedose (100) gemäß Anspruch 6, bei der die Dome (124) je eine an den Gewindebuchsen (134) ausgerichtete seitliche Serviceöffnung (136) aufweisen.

8. Ladedose (100) gemäß einem der Ansprüche 2 bis 5 und Anspruch 7, bei der die Verschlusskappen (126) ebenfalls Serviceöffnungen (136) aufweisen, die in einer Endlage der Verschlusskappen (126) an den Gewindebuchsen (134) ausgerichtet sind, wobei zumindest die Serviceöffnungen (136) der Verschlusskappen (126) durch Servicedeckel (138) verschließbar sind.

9. Ladedose (100) gemäß Anspruch 8, bei der die Servicedeckel (138) je ein Dichtelement (140) zum Abdichten der Serviceöffnung (136) aufweisen.

10. Ladedose (100) gemäß einem der vorhergehenden Ansprüche, bei der die Dome (124) je eine Dichtung (130) aufweisen, wobei die Dichtung (130) zumindest einen Innendurchmesser des jeweiligen Doms (124) überspannt und gegenüber dem Innendurchmesser ein Übermaß aufweist.

11. Ladedose (100) gemäß Anspruch 10, bei der die Dichtung (130) ferner eine Durchführung (128) für den Leiter (112) aufweist, wobei die Durchführung (128) ein Untermaß gegenüber dem Leiter (112) aufweist.
